# EUROPEAN PATENT SPECIFICATION

(11) **EP 2 571 601 B1**
(45) Date of publication and mention of the grant of the patent: **19.09.2018**
(21) Application number: 11783134.7
(22) Date of filing: 10.05.2011
(51) Int. Cl.: B01D 53/50, F23C 10/10, F23J 15/00, C10L 10/04, F23C 10/00, F23J 7/00, F23C 9/00, F23L 7/00

(54) **METHOD OF CAPTURING SULFUR OXIDES FROM THE FLUE GAS OF AN OXYFUEL COMBUSTION CFB BOILER**
VERFAHREN ZUR ERFASSUNG VON SCHWEFELOXIDEN AUS DEM ABGAS EINES OXYFUEL-VERBRENNUNGS-CFB-BOILERS
PROCÉDÉ DE CAPTURE D'OXYDES DE SOUFRE À PARTIR DU GAZ DE COMBUSTION D'UNE CHAUDIÈRE CFB À COMBUSTION D'OXYCOMBUSTIBLE

(30) Priority: 17.05.2010 FI 20105537
(43) Date of publication of application: 27.03.2013
(73) Proprietor: Sumitomo SHI FW Energia Oy, 02130 Espoo (FI)
(72) Inventor: ERIKSSON, Timo, 02130 Espoo (FI); KUIVALAINEN, Reijo, 70870 Hiltulanlahti (FI); HILTUNEN, Matti, FI-48600 Kotka (FI)
(74) Representative: Genip Oy
(86) International application number: PCT/FI2011/050429
(87) International publication number: WO 2011/144806

(56) References cited:
- DE-A1- 3 546 465
- DE-A1- 19 514 135
- JP-A- 2005 098 673
- US-A1- 2004 154 220
- US-A1- 2005 287 058

## Description

The present invention relates to a method of capturing sulfur oxides from the flue gas of an oxyfuel combustion circulating fluidized bed (CFB) boiler according to the preamble of the accompanying independent claim. The present invention thus relates to a method of reducing sulfur oxide emissions of an oxyfuel combustion circulating fluidized bed boiler, comprising the steps of: feeding a first stream comprising sulfur-containing carbonaceous fuel to a furnace of the boiler; feeding a second stream comprising CaCO₃ to the furnace; feeding a stream of substantially pure oxygen to the furnace so as to combust the fuel, whereby SO₂ and SO₃ are formed and flue gas mainly consisting of carbon dioxide and water is produced; discharging the flue gas from the furnace to an upper flue gas channel; recycling a first portion of the flue gas from the upper flue gas channel back to the furnace, and discharging a second portion of the flue gas from the upper flue gas channel via a discharge channel.

Carbonaceous fuel, such as coal, is according to conventional practice combusted in the furnace of a CFB boiler in a fluidized bed comprising inert material, such as sand, and sulfur dioxide reducing additive, such as limestone. Fluidizing gas, usually air, is introduced through a bottom grid of the furnace to fluidize the bed material and to oxidize the fuel. Meanwhile, sulfur in the fuel mainly oxidizes to form sulfur dioxide (SO₂), which may be harmful if emitted to the environment in large quantities. A portion of the SO₂ is converted to sulfur trioxide (SO₃), which is especially harmful when combining with water (H₂O) to sulfur acid (H₂SO₄), which may give rise to corrosion in the flue gas channel at temperatures below the acid dew point.

At the high temperatures prevailing in the furnace of a CFB boiler, typically from 750 °C to 900 °C, calcium carbonate (CaCO₃) of the limestone is usually calcined to calcium oxide (CaO), which converts SO₂ and SO₃ to calcium sulfate (CaSO₄), i.e., gypsum, which can be removed from the furnace along with the ashes produced in the combustion. If the carbon dioxide (CO₂) content in the furnace is above a certain limit and the temperature is low enough, it is also possible that calcium carbonate does not calcinate to CaO, but SO₂ and SO₃ are converted directly by CaCO₃ to CaSO₄.

Oxyfuel combustion is a known though still developmental method of combusting fuel by an oxidant consisting of oxygen and recycled flue gas. The purpose of oxyfuel combustion is to produce flue gas that predominantly consists of CO₂ and H₂O, with smaller amounts of other gases, such as oxygen, argon and nitrogen. Water vapor can be removed from the flue gas through condensation, after which the flue gas mainly consists (e.g. 90%) of CO₂. Thereby, it is relatively easy to separate, by cooling and compressing, the CO₂ from the flue gas to liquid or supercritical form, which then can be transported to a final storage.

An oxyfuel combustion boiler plant is complicated, compared to a conventional boiler plant for combustion with air, by having an air separation unit (ASU) for producing oxygen and a CO₂ processing unit (CPU) for separating CO₂ from the flue gas. The boiler itself can be designed so that it largely resembles a normal air-fired CFB boiler and to enable it also to be operated in air firing mode. In oxyfuel combustion mode, a large portion of the flue gas is recirculated back to the furnace in order to replace the nitrogen in the oxidant gas of the air firing mode. Thereby, the combustion temperature as well as the fluidizing rate and the heat transfer efficiency can be maintained almost unchanged. As a major difference to air firing, the flow rate of the flue gas led out from the boiler plant in the oxyfuel combustion mode is, due to the flue gas recycling, only a fraction, typically 25 - 35 %, of the flow rate of the flue gas discharged from the furnace.

In the absence of nitrogen in the oxidant gas, the theoretical maximum concentrations of various gaseous impurities, such as SO_{X}, are multifold compared with air firing. This means that if the same upper limit were applied for the impurities as in air firing (as ppm or mg/m³), the capture efficiency would have to be much higher. It is also possible that high SO_{X} capture efficiency will be required, for example, to avoid dissolving SO₂ in the liquid or supercritical CO₂ produced in the CPU.

A relatively good sulfur-reduction efficiency can be obtained in conventional CFB boilers solely by feeding sulfur dioxide-reducing additive, usually limestone (calcium carbonate), directly into the furnace. However, in order to achieve 98 % or better reduction efficiency in the furnace, the reducing additive has to be fed into the furnace in abundance to the sulfur in the fuel, typically a Ca/S molar ratio as high as 4 or 5 is required with low sulfur coals. With such high Ca/S ratios, the bottom ash and fly ash discharged from the furnace may contain a large amount of excess CaO, typically more than 20 %, which makes the use or disposal of the ashes difficult. The calcination of excessive amounts of limestone to form calcium oxide may also decrease the thermal efficiency of the boiler. A method of reducing sulfur oxide emissions of an oxyfuel combustion circulating fluidized bed boiler having the features specified in the preamble of claim 1 is disclosed in DE 3546465.

U.S. Patent No. 4,309,393 discloses a sulfur reduction method for an air firing fluidized bed boiler, wherein limestone is added to the furnace in Ca/S ratios ranging from 1 to 1.5, so as to provide sulfur reduction of 30 to 60 % in the furnace. The ashes produced in the furnace, which contain a considerable amount of CaO, are collected and treated for utilization in another sulfur-reduction stage disposed in the flue gas duct downstream of the furnace.

U.S. Patent No. 7,427,384 discloses a sulfur reduction method for an air firing fluidized bed boiler, wherein sulfur dioxide is firstly reduced by feeding calcium carbonate into the furnace at a Ca/S ratio of at most 1.0, preferably between 0.6 and 1.0, and secondly in a sulfur reducing stage downstream of the furnace.

U.S. Patent No. 6,024,029 discloses an oxyfuel combustion boiler with an acid scrubber arranged into the branch of the flue gas channel leading from the boiler to the CPU. Thereby, it is possible to purify only the small flue gas stream conveyed to the CPU, and low investment costs and a low overall sorbent consumption are obtained.

A drawback of the combustion process described in U.S. Patent No. 6,024,029 is that without in-furnace sulfur capture, the SO₂ concentrations in the boiler may rise very high, for example, to about 10 000 ppm with a fuel containing 2.6 % sulfur. Furthermore, a portion of the SO₂, possibly as much as 15 %, is expected to convert to SO₃. Thus, the SO₃ concentration could rise to as high as 1500 ppm, whereby the acid dew point would rise clearly higher than in conventional combustion, for example, to above 200 °C. The rising of the acid dew point is also partly due to the fact that the H₂O concentration of the flue gas is in oxyfuel combustion clearly higher than that in conventional combustion with air. Thus, an oxyfuel combustion process without in-furnace sulfur capture could require significant changes in the arrangements, for example, materials to be used, at the cold end of flue gas channel.

An object of the present invention is to provide an efficient method of reducing sulfur oxide emissions of an oxyfuel combustion circulating fluidized bed boiler.

In order to obtain the above-mentioned object, and other objects, of the present invention, a method of reducing sulfur oxide emissions of an oxyfuel combustion circulating fluidized bed boiler in accordance with the characterizing part of the independent claim is provided. Thereby, a method of reducing sulfur oxide emissions of an oxyfuel combustion circulating fluidized bed boiler is provided, wherein the second stream is fed at such a rate relative to the first stream that the molar ratio of calcium in the second stream to sulfur in the first stream (the Ca/S molar ratio) is between about 0.02 and about 0.1 so as to capture at least a portion of the formed SO₃ in the furnace or in the upper flue gas channel to CaSO₄, and the method comprises the step of capturing at least a portion of the formed SO₂ in a sulfur reduction stage arranged in the discharge channel.

The present invention thus relates to a method of reducing sulfur oxide emissions of an oxyfuel combustion boiler, wherein CaCO₃ is fed to the furnace at a rate which is clearly less than what is used in conventional CFB combustion with air. The method is based on calculations showing that CaSO₄ is in chemical equilibrium very stable, if any SO₃ exists in the flue gas, and when CaSO₄ decomposes, SO₂ will be released. The result may be interpreted so that SO₃ is even more eager to react with CaCO₃ or CaO than SO₂, and, thus, the sorbent acts as a very efficient SO₃ sink. In other words, limestone injected into furnace in small amounts is expected to react selectively with SO₃ and less with SO₂. Thus, even a relatively small amount of calcium carbonate fed into the oxyfuel combustion furnace appears to very efficiently capture most of the SO₃ formed during the combustion.

According to the present invention, CaCO₃ is advantageously fed to the furnace only at a sufficient rate that a substantial share, preferably nearly all, of the formed SO₃ is captured in the furnace or in the upper flue gas channel to CaSO₄. Simultaneously, most of SO₂ is not captured by the CaCO₃ fed into the furnace, but, instead, it may be captured in another sulfur reduction stage arranged in the discharge channel.

If no CaCO₃ is fed into the furnace, the SO₂ concentration of the flue gas in the upper flue gas channel may become very high, and the SO₃ content is typically at least 1 %, possibly as much as 15 %, of the total SO_{X} content, i.e., of the content of SO₂ and SO₃. According to a preferred embodiment of the present invention, CaCO₃ is fed to the furnace at such a rate that less than 20 % of the sulfur is captured to CaSO₄ in the furnace or in the upper flue gas channel by the CaCO₃ fed into the furnace and the content of SO₃ is at most 0.25 % of content SO₂ and SO₃ in the upper flue gas channel. According to another preferred embodiment of the present invention, CaCO₃ is fed to the furnace at such a rate that less than 30 % of the sulfur is captured to CaSO₄ in the furnace or in the upper flue gas channel by the CaCO₃ fed into the furnace and the content of SO₃ is at most 0.125 % of content SO₂ and SO₃ in the upper flue gas channel.

According to equilibrium calculations, a substantial share of SO₂ could oxidize to SO₃ downstream of the furnace. However, the kinetics of the oxidizing reaction is slow at temperatures below those in the furnace and, thus, the SO₃ concentration may remain essentially at the level it has at about or shortly after the furnace exit. Therefore, the flue gas in the upper flue gas channel may contain only a minor concentration of SO₃ while having a very high concentration of SO₂.

According to the present invention, calcium carbonate is fed into the furnace at such a rate, depending on the amount of SO₃ forming during the combustion, that the Ca/S molar ratio is about 0.02 and about 0.1. Because a portion of CaCO₃ fed into the furnace may be consumed for reactions with SO₂, it may be advantageous to feed more CaCO₃ than the amount needed for capturing SO₃ only.

According to a preferred embodiment of the present invention, the method comprises a step of measuring the SO₃ content in the upper flue gas channel, and the Ca/S molar ratio is determined, i.e., the rate of feeding CaCO₃ into the furnace is determined, so as to limit the measured SO₃ content below a predetermined limit. The CaCO₃ feeding rate is preferably selected so that the measured SO₃ content is below 20 ppm, even more preferably so that the measured SO₃ content is below 10 ppm. Because a portion of the formed SO₂ may be converted to SO₃ at the hot end of the flue gas channel, the SO₃ content of the flue gas is advantageously measured at a location downstream the region of efficient SO₃ conversion, such as below a temperature of 500 °C. The SO₃ content of the flue gas may be determined by any suitable method, either online in the flue gas channel or on samples of flue gas. Advantageously the SO₃ content is measured immediately downstream of a dust filter arranged in the flue gas channel.

According to another preferred embodiment of the present invention, the method comprises a step of measuring the acid dew point of the flue gas, and the Ca/S ratio is determined so as to maintain the acid dew point below a predetermined limit. The CaCO₃ feeding rate is preferably selected so that the acid dew point is below 140 °C, even more preferably so that the acid dew point is below 130 °C.

According to an advantageous embodiment of the present invention, the mean diameter of the calcium carbonate fed into the furnace is preferably less than about 200 µm, even more preferable less than about 50 µm. By using such fine particles, the calcium carbonate does not remain very long in the hot circulation of the CFB boiler, but, instead, has a rather high probability to escape, together with cleaned flue gas via the gas outlet of the particle separator of the CFB boiler. Thereby, the use of fine CaCO₃ minimizes possible harmful effects of calcium compounds accumulating in the hot circulation loop, such as recarbonation of CaO. Moreover, using of fine CaCO₃ is advantageous on the basis of the observation that fine CaCO₃ seems to improve the selectiveness of capturing of SO₃ instead of SO₂. Reason for this effect is probably that dry CaCO₃ or CaO remain to capture SO₃ even at relatively low temperatures, say at 700 - 200 °C, where SO₂ is not captured. Capturing SO₃ in the flue gas channel is especially important in cases where a NO_{X} catalyst or certain deposit layers on superheater surfaces catalyze the oxidation of SO₂ to SO₃. When the flue gas entrains fine CaCO₃ or CaO particles, SO₃ may be efficiently captured even in the particle layer of a dust filter arranged in the flue gas channel, i.e. typically at temperatures 180 - 140 °C.

According to the present invention, the capturing of SO₂, or at least the main part of SO₂ formed in the combustion of the fuel, takes place in a sulfur reduction stage arranged in the discharge channel, downstream of the branch point, i.e., take-off point, of the recycling channel. This is performed by any known method, for example, by a dry, semidry, and wet sulfur-reduction process. Wet sulfur reduction, for example, is advantageous over in-furnace sulfur reduction in requiring a much smaller amount of sorbent. The capturing of SO₂ may alternatively be integrated into the CPU process.

The capturing of SO₂ in the discharge channel, downstream of the branch point of the recycling channel, is advantageous especially because the volume of the flue gas flow therein is much smaller than upstream of the branch point of the recycling channel. Thus, the size and investment costs, as well as operation costs, of the SO₂ capturing equipment are minimized. As a further advantage, the product of the sulfur capturing process can be used more easily when there is no ash mixed with the product.

This invention presents an optimized method for SO_{X} capture in oxyfuel CFB combustion, taking into account acid dew point control in the boiler. Most of the formed SO₂ is captured with an effective clean-up device such as a wet scrubber placed in the flue gas stream in the discharge channel, i.e., after the branch point of the recycled flue gas. Simultaneously, a small amount of calcium carbonate, or limestone, is injected into furnace to control the SO₃ level and keep acid dew point low. Based on the idea that limestone injection is carried out to control SO₃ rather than SO₂, the Ca/S molar ratio is much smaller than usual, preferably in the range of 0.02 - 0.5. Thereby, the sorbent consumption and generated ash volumes are minimized, and excess CaO in the ash is avoided.

The above brief description, as well as further objects, features, and advantages of the present invention will be more fully appreciated by reference to the following detailed description of the presently preferred, but nonetheless illustrative, embodiments in accordance with the present invention, when taken in conjunction with the accompanying drawing, wherein:

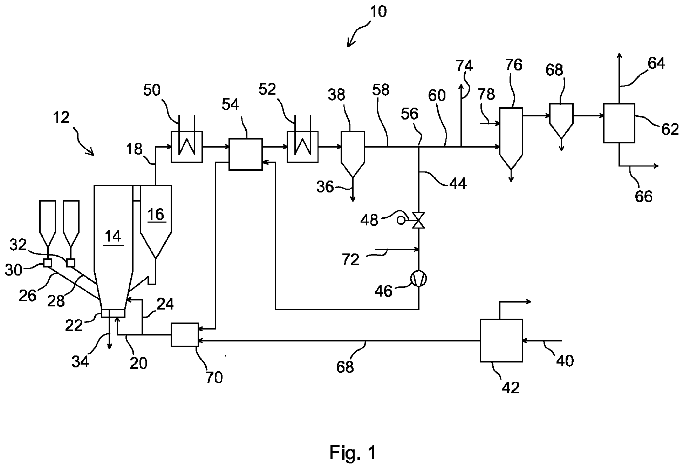

FIG. 1 is a schematic diagram of an oxyfuel combustion CFB boiler plant in accordance with the present invention.

FIG. 1 shows a schematic diagram of an oxyfuel combustion power plant 10 with a circulating fluidized bed (CFB) boiler 12, in accordance with a preferred embodiment of the present invention. The boiler comprises a furnace 14, a cyclone separator 16 connected to the furnace, and a flue gas channel 18 for discharging cleaned flue gas gases from the cyclone separator. The furnace 14 includes conventional means 20 for feeding primary oxidant gas as a fluidizing gas through a wind box 22 to the bottom of the furnace, and means 24 for introducing secondary oxidant gas at a higher level of the furnace. Secondary oxidant gas can be introduced at multiple levels, but for the sake of clarity, a single level is shown in FIG. 1.

The furnace 12 also includes means 26 for feeding fuel into the furnace, and means 28 for introducing limestone, or calcium carbonate, CaCO₃, into the furnace. The calcium carbonate can in practice be replaced by another additive which has a similar effect as calcium carbonate in reducing sulfur oxides. The means 26 and 28 for introducing the fuel and CaCO₃ may include, for example, feed hoppers or feed bins, feed channels with feed conveyors, such as belts or feed screws, feeder chutes, or pneumatic feed systems. The means 26 and 28 for introducing the fuel and CaCO₃ may further include means 30 and 32 for controlling the feed rates of the fuel and CaCO₃, respectively. The means 30 and 32 for controlling the feed rates of the fuel and CaCO₃ may include, for example, rotary feeders or carrier gas controllers.

According to the present invention, only a small portion of sulfur oxides formed during the combustion of the fuel is bound by the CaCO₃ fed to the furnace, or calcium oxide, CaO, formed in the furnace, to calcium sulfate CaSO₄. Main portion of the sulfur oxides will be captured in another sulfur reducing stage, as will be explained later. Non-combustible fuel material and CaSO₄ are removed from the furnace 12 through a bottom ash discharge duct 34, and from the flue gas through a fly ash discharge duct 36 of a dust separator 38 arranged in the flue gas channel 18. The dust separator 38 may advantageously be an electrostatic dust separator or a bag filter.

The oxidant gas is preferably a mixture of substantially pure oxygen, produced from an air stream 40 in an air separation unit (ASU) 42, and a portion of the flue gas, which is recycled via a recycling channel 44. The recycling channel 44 advantageously comprises a flow controller, such as a controllable fan 46 and/or a damper 48, for controlling the flue gas recycling rate. The recycling rate of the flue gas is advantageously adjusted such that the average O₂ content of the oxidant gas is close to that of air, preferably, from about 18% to about 28%. In some applications of the present invention, it is also possible to introduce the streams of recycled flue gas and substantially pure oxygen separately, or multiple streams with different O₂ contents, into, for example, different portions of the furnace 14.

As is conventional, the furnace 14 usually comprises evaporation surfaces, not shown in FIG. 1, and the flue gas channel 18 further comprises heat exchanger surfaces 50, 52, for example, superheaters and economizers. For the sake of simplicity, FIG. 1 shows only two heat exchanger surfaces 50, 52, but, in practice, the flue gas channel 18 usually comprises multiple superheating, reheating and economizer surfaces for recovering heat from the flue gas. Between the steam generating heat exchange surfaces 50 and 52, there is arranged a gas-gas heat exchanger 54, such as a regenerative heat exchanger, for transferring heat from the flue gas directly to the recycling portion of the flue gas. The number and arrangement of heat exchange surfaces are not relevant for the present invention, and they may differ from that shown in FIG. 1.

The flue gas channel 18 may also comprise other conventional gas cleaning units, such as a NOX reducing catalyst (SCR) arranged upstream of the branch point 56 of the recycling channel 44. Such units, however, are not shown in FIG. 1.

The branch point 56 divides the flue gas channel 18 to an upstream portion of the flue gas channel 58, i.e., an upper flue gas channel, and a discharge channel 60. At the branch point, the flue gas stream is divided into a recycling portion, which is conveyed through the recycling channel 44 back to the furnace 14 and an end portion, which is discharged from the system through the discharge channel 60.

The discharge channel 60 comprises a carbon dioxide processing unit (CPU) 62 for cooling, cleaning and compressing the end portion of the flue gas so as to separate carbon dioxide therefrom. The CPU 62 usually comprises a dryer for completely drying all water from the flue gas, and a separator for separating a stream of non-condensable gases 64, such as oxygen, and possibly other impurities, from the carbon dioxide. A stream of carbon dioxide 66 is typically captured in a liquid or supercritical state, at a pressure of, for example, about one 110 bar, so that it can be transported for further use or to be stored in a suitable place. FIG. 1 shows, separately, a condensing gas cooler 68, located upstream of the carbon dioxide capturing unit 60, for initially removing water from the flue gas.

An oxygen channel 68 may be connected directly from the ASU 42 to the furnace 14, but advantageously the oxygen channel 68 and the recycling channel 44 are both connected to a mixer 70, and a stream of mixed gas is lead as the oxidant gas to the furnace through the oxidant gas feeding means 20, 24.

The system may also comprise an air intake 72 for feeding air to the furnace. The air stream is, preferably, introduced into the recycling channel 44 upstream of the gas-gas heat exchanger 54, whereby it is possible to transfer heat directly from the flue gas to the stream of air. The purpose of the air intake 72 is to enable switching from oxyfuel combustion to air-firing combustion and vice versa. Thus, when introducing air to the gas recycling line, the oxygen supply is stopped, and the recycling of flue gas is minimized or, preferably, totally stopped, by the damper 48. The flue gas comprises, in the air-firing mode, carbon dioxide and water mixed with a large amount of nitrogen, whereby, it is not possible to easily capture the carbon dioxide from the flue gas, which is, thus, in this case, released to the environment through a stack 74. In the air-firing mode, any required capturing of SO_{X} is advantageously made by conventional methods, for example, by efficient in-furnace sulfur capturing.

A sulfur-reducing stage 76, for capturing any remaining SO₂ in the flue gas, is arranged in the discharge channel 58. This stage may include dry, semidry, and/or wet sulfur-reduction equipment, different types of which are well known per se, and, therefore, are not described herein. The sulfur-reducing stage 76 advantageously includes means 78 for adding a second sulfur-reducing additive, for example, calcium hydroxide, in the form of dry or semidry particles or as aqueous slurry. The means 78 for adding the second sulfur-reducing additive may include, for example, a nozzle or a sprayer system. Because the final sulfur reducing stage is arranged in the discharge channel 60, wherein the flue gas flow rate is only a small portion, such as 30 %, of the total rate of flue gas discharged from the furnace 14, the size of the equipment of the second sulfur reducing stage 76 is minimized. Correspondingly, also the amount of second sulfur reducing additive needed for high sulfur reducing efficiency is relatively small. According to an alternative embodiment of the present invention, not shown in FIG. 1, the capturing of SO₂, i.e., the final sulfur-reducing stage, is integrated into the CPU.

It has been found that an especially advantageous sulfur-reduction process is obtained by combining sulfur reduction in the furnace 14 with a downstream sulfur-reduction stage 76, wherein only a limited amount of sulfur reduction takes place in the furnace. According to the present invention, the sulfur reduction in the furnace is limited by providing a Ca/S molar ratio from about 0.02 to about 0.1. By this small amount of CaCO₃, all or at least most of SO₃ formed in the furnace can be captured, but harmful effects of excess CaCO₃ are minimized. When the oxyfuel combustion plant is used in air-firing combustion, for example, at the start-up of the plant, the rate of feeding CaCO₃ to the furnace would advantageously be increased so as to obtain sufficient sulfur oxide capture in the furnace.

While the invention has been described herein by way of examples in connection with what are at present considered to be the most preferred embodiments, it is to be understood that the invention is not limited to the disclosed embodiments, but is intended to cover various combinations or modifications of its features and several other applications included within the scope of the invention as defined in the appended claims.

## Claims

1. A method of reducing sulfur oxide emissions of an oxyfuel combustion circulating fluidized bed boiler, comprising the steps of:
(a) feeding a first stream comprising sulfur-containing carbonaceous fuel to a furnace of the boiler;
(b) feeding a second stream comprising CaCO₃ to the furnace;
(c) feeding a stream of substantially pure oxygen to the furnace so as to combust the fuel, whereby SO₂ and SO₃ are formed and flue gas consisting mainly of carbon dioxide and water is produced;
(d) discharging the flue gas from the furnace to an upper flue gas channel;
(e) recycling a first portion of the flue gas from the upper flue gas channel via a recycling channel back to the furnace, and
(f) discharging a second portion of the flue gas from the upper flue gas channel via a discharge channel,
**characterized in that** the second stream is fed at such a rate relative to the first stream that the molar ratio of calcium in the second stream to sulfur in the first stream (the Ca/S molar ratio) is between about 0.02 and about 0.1 so as to capture at least a portion of the formed SO₃ in the furnace or in the upper flue gas channel to CaSO₄, and the method comprises the step of
(g) capturing at least a portion of the formed SO₂ in a sulfur reduction stage arranged in the discharge channel.

2. The method of claim 1, **characterized in that** second stream is fed to the furnace at such a rate that less than 20 % of the sulfur is captured to CaSO₄ in the furnace or in the upper flue gas channel by the CaCO₃ fed into the furnace and the content of SO₃ is at most 0.25 % of content SO₂ and SO₃ in the upper flue gas channel.

3. The method of claim 1, **characterized in that** second stream is fed to the furnace at such a rate that less than 30 % of the sulfur is captured to CaSO₄ in the furnace or in the upper flue gas channel by the CaCO₃ fed into the furnace and the content of SO₃ is at most 0.125 % of content SO₂ and SO₃ in the upper flue gas channel.

4. The method of claim 1, **characterized in that** the method comprises a step of measuring the acid dew point of the flue gas, and the Ca/S ratio is determined so as to maintain the acid dew point below a predetermined limit.

5. The method of claim 4, **characterized in that** the Ca/S ratio is determined so as to maintain the acid dew point below 140 °C.

6. The method of claim 5, **characterized in that** the Ca/S ratio is determined so as to maintain the acid dew point below 130 °C.

7. The method of claim 1, **characterized in that** the method comprises a step of measuring the SO₃ content in the upper flue gas channel, and the Ca/S molar ratio is determined so as to limit the measured SO₃ content below a predetermined limit.

8. The method of claim 7, **characterized in that** the method comprises a step of measuring the SO₃ content in the upper flue gas channel, and the Ca/S molar ratio is determined so as to limit the measured SO₃ content below 20 ppm.

9. The method of claim 8, **characterized in that** the method comprises a step of measuring the SO₃ content in the upper flue gas channel, and the Ca/S molar ratio is determined so as to limit the measured SO₃ content below 10 ppm.

10. The method of claim 1, **characterized in that** the mean diameter of the calcium carbonate fed into the furnace is less than about 200 µm.

11. The method of claim 10, **characterized in that** the mean diameter of the calcium carbonate fed into the furnace is less than about 50 µm.

12. The method of claim 1, **characterized in that** the capturing of SO₂ in the sulfur reduction stage is performed by one of a dry, semidry, and wet sulfur-reduction process, or **in that** the sulfur reduction stage is integrated into a CPU process.

## Patentansprüche

1. Verfahren zum Reduzieren von Schwefeloxidemissionen aus einem zirkulierenden Wirbelschichtkessel mit Oxyfuel-Verbrennung, umfassend die Schritte des:
(a) Zuführens eines ersten Stroms, der schwefelhaltigen, kohlenstoffhaltigen Brennstoff umfasst, in einen Feuerraum des Kessels;
(b) Zuführens eines zweiten Stroms, der CaCO₃ umfasst, zu dem Feuerraum;
(c) Zuführens eines Stroms von in Wesentlichem reinem Sauerstoff zu der Feuerstelle, um den Brennstoff zu verbrennen, wobei SO₂ und SO₃ gebildet werden und Rauchgas, das hauptsächlich aus Kohlendioxid und Wasser besteht, hergestellt wird;
(d) Ablassens des Rauchgases aus der Feuerstelle in einen oberen Rauchgaskanal;
(e) Rückführens eines ersten Teils des Rauchgases aus dem oberen Rauchgaskanal über einen Rückführungskanal zurück zu der Feuerstelle und
(f) Ablassens eines zweiten Teils des Rauchgases aus dem oberen Rauchgaskanal über einen Ablasskanal, **dadurch gekennzeichnet, dass** der zweite Strom mit einer derartigen Geschwindigkeit mit Bezug auf den ersten Strom zugeführt wird, dass das Molverhältnis von Calcium in dem zweiten Strom zu Schwefel in dem ersten Strom (das Ca/S-Molverhältnis) zwischen etwa 0,02 und etwa 0,1 liegt, um mindestens einen Teil des gebildeten SO₃ in der Feuerstelle oder in dem oberen Rauchgaskanal zu CaSO₄ aufzufangen und das Verfahren den Schritt umfasst des
(g) Auffangens von mindestens einem Teil des gebildeten SO₂ in einer Schwefelreduktionsstufe, die in dem Ablasskanal angeordnet ist.

2. Verfahren nach Anspruch 1, **dadurch gekennzeichnet, dass** der zweite Strom der Feuerstelle mit einer derartigen Geschwindigkeit zugeführt wird, dass weniger als 20 % des Schwefels zu CaSO₄ in der Feuerstelle oder in dem oberen Rauchgaskanal durch das in den Ofen eingeführte CaSO₃ aufgefangen wird und der Gehalt an SO₃ höchstens 0,25 % des Gehalts an SO₂ und SO₃ in dem oberen Rauchgaskanal beträgt.

3. Verfahren nach Anspruch 1, **dadurch gekennzeichnet, dass** der zweite Strom der Feuerstelle mit einer derartigen Geschwindigkeit zugeführt wird, dass weniger als 30 % des Schwefels zu CaSO4 in der Feuerstelle oder in dem oberen Rauchgaskanal durch das in den Ofen eingeführte CaSO3 aufgefangen wird und der Gehalt an SO3 höchstens 0,125 % des Gehalts an SO2 und SO3 in dem oberen Rauchgaskanal beträgt.

4. Verfahren nach Anspruch 1, **dadurch gekennzeichnet, dass** das Verfahren einen Schritt des Messens des Säuretaupunkts des Rauchgases umfasst und das Ca/S-Verhältnis so bestimmt wird, dass der Säuretaupunkt unterhalb einer vorbestimmten Grenze gehalten wird.

5. Verfahren nach Anspruch 4, **dadurch gekennzeichnet, dass** das Ca/S-Verhältnis so bestimmt wird, dass der Säuretaupunkt unter 140 °C gehalten wird.

6. Verfahren nach Anspruch 5, **dadurch gekennzeichnet**, das Ca/S-Verhältnis so bestimmt wird, dass der Säuretaupunkt unter 130 °C gehalten wird

7. Verfahren nach Anspruch 1, **dadurch gekennzeichnet, dass** das Verfahren einen Schritt des Messens des S03-Gehalts in dem oberen Rauchgaskanal umfasst und das Ca/S-Molverhältnis so bestimmt wird, dass der gemessene SO3-Gehalt auf unter eine vorbestimmte Grenze beschränkt wird.

8. Verfahren nach Anspruch 7, **dadurch gekennzeichnet, dass** das Verfahren einen Schritt des Messens des S03-Gehalts in dem oberen Rauchgaskanal umfasst und das Ca/S-Molverhältnis so bestimmt wird, dass der gemessene SO3-Gehalt auf unter 20 ppm beschränkt wird.

9. Verfahren nach Anspruch 8, **dadurch gekennzeichnet, dass** das Verfahren einen Schritt des Messens des S03-Gehalts in dem oberen Rauchgaskanal umfasst und das Ca/S-Molverhältnis so bestimmt wird, das der gemessene S03-Gehalt auf unter 10 ppm beschränkt wird.

10. Verfahren nach Anspruch 1, **dadurch gekennzeichnet, dass** der mittleren Durchmesser des Calciumcarbonats, das in die Feuerstelle eingeführt wird, weniger als etwa 200 µm beträgt.

11. Verfahren nach Anspruch 10, **dadurch gekennzeichnet, dass** der mittleren Durchmesser des Calciumcarbonat, das in die Feuerstelle eingeführt wird, weniger als etwa 50 µm beträgt.

12. Verfahren nach Anspruch 1, **dadurch gekennzeichnet, dass** das Auffangen von S02 in der Schwefelreduktionsstufe durch eines von einem trockenen, halbtrockenen oder nassen Schwefelreduktionsverfahren ausgeführt wird oder dass die Schwefelreduktionsstufe in einen Zentralprozessor-Vorgang integriert ist.

## Revendications

1. Procédé permettant de réduire des émissions d'oxyde de soufre d'une chaudière à lit fluidisé circulant par oxycombustion, comprenant les étapes consistant à :
(a) alimenter un premier courant comprenant un combustible carboné contenant du soufre vers un four de la chaudière ;
(b) alimenter un deuxième courant comprenant du CaCO₃ vers le four ;
(c) alimenter un courant d'oxygène sensiblement pur vers le four de façon à brûler le combustible, selon lequel du SO₂ et du SO₃ sont formés et un gaz de combustion comprenant principalement du dioxyde de carbone et de l'eau est produit ;
(d) décharger le gaz de combustion provenant du four vers un canal supérieur de gaz de combustion ;
(e) recycler une première partie du gaz de combustion provenant du canal supérieur de gaz de combustion par l'intermédiaire d'un canal de recyclage vers le four, et
(f) décharger une deuxième partie du gaz de combustion provenant du canal supérieur de gaz de combustion par l'intermédiaire d'un canal de décharge,
**caractérisé en ce que** le deuxième courant est alimenté à un tel débit par rapport au premier courant que le rapport molaire du calcium dans le deuxième courant au soufre dans le premier courant (le rapport molaire Ca/S) est compris entre environ 0,02 et environ 0,1 de façon à capturer au moins une partie du SO₃ formé dans le four ou dans le canal supérieur de gaz de combustion de CaSO₄, et le procédé comprend les étapes consistant à
(g) capturer au moins une partie du SO₂ formé dans une étape de réduction de soufre agencée dans le canal de décharge.

2. Procédé selon la revendication 1, **caractérisé en ce que** le deuxième courant est alimenté vers le four à un débit tel que moins de 20 % du soufre est capturé en CaSO₄ dans le four ou dans le canal supérieur de gaz d'échappement par le CaCO₃ alimenté dans le four et la teneur en SO₃ est tout au plus 0,25 % de la teneur en SO₂ et en SO₃ dans le canal supérieur de gaz d'échappement.

3. Procédé selon la revendication 1, **caractérisé en ce que** le deuxième courant est alimenté vers le four à un débit tel que moins de 30 % du soufre est capturé en CaS04 dans le four ou dans le canal supérieur de gaz d'échappement par le CaCO3 alimenté dans le four et la teneur en SO3 est tout au plus 0,125 % de la teneur en SO2 et en SO3 dans le canal supérieur de gaz d'échappement.

4. Procédé selon la revendication 1, **caractérisé en ce que** le procédé comprend une étape consistant à mesurer le point de rosée acide du gaz d'échappement, et le rapport Ca/S est déterminé de façon à maintenir le point de rosée acide à une valeur inférieure à une limite prédéterminée.

5. Procédé selon la revendication 4, **caractérisé en ce que** le rapport Ca/S est déterminé de façon à maintenir le point de rosée acide à une valeur inférieure à 140 °C.

6. Procédé selon la revendication 5, **caractérisé en ce que** le rapport Ca/S est déterminé de façon à maintenir le point de rosée acide à une valeur inférieure à 130 °C.

7. Procédé selon la revendication 1, **caractérisé en ce que** le procédé comprend une étape consistant à mesurer la teneur en S03 dans le canal supérieur de gaz d'échappement, et le rapport molaire Ca/S est déterminé de façon à limiter la teneur en S03 mesurée à une valeur inférieure à une limite prédéterminée.

8. Procédé selon la revendication 7, **caractérisé en ce que** le procédé comprend une étape consistant à mesurer la teneur en S03 dans le canal supérieur de gaz d'échappement, et le rapport molaire Ca/S est déterminé de façon à limiter la teneur en S03 mesurée à une valeur inférieure à 20 ppm.

9. Procédé selon la revendication 8, **caractérisé en ce que** le procédé comprend une étape consistant à mesurer la teneur en S03 dans le canal supérieur de gaz d'échappement, et le rapport molaire Ca/S est déterminé de façon à limiter la teneur en S03 mesurée à une valeur inférieure à 10 ppm.

10. Procédé selon la revendication 1, **caractérisé en ce que** le diamètre moyen du carbonate de calcium alimenté dans le four est inférieur à environ 200 µm.

11. Procédé selon la revendication 10, **caractérisé en ce que** le diamètre moyen du carbonate de calcium alimenté dans le four est inférieur à environ 50 µm.

12. Procédé selon la revendication 1, **caractérisé en ce que** la capture de S02 lors de l'étape de réduction de soufre est effectuée selon un processus parmi un processus de réduction du soufre sec, demi-sec et humide, ou **en ce que** l'étape de réduction de soufre est intégrée dans un processus de CPU.
